(19) Europäisches Patentamt
European Patent Office
Office européen des brevets

(11) **EP 4 471 451 A1**

(12) **EUROPEAN PATENT APPLICATION**

(43) Date of publication:
**04.12.2024 Bulletin 2024/49**

(21) Application number: **23213299.3**

(22) Date of filing: **30.11.2023**

(51) International Patent Classification (IPC):
**G01S 7/295** (2006.01)   **G01S 13/42** (2006.01)
**G01S 13/86** (2006.01)   **G01S 13/89** (2006.01)
**G01S 13/931** (2020.01)

(52) Cooperative Patent Classification (CPC):
**G01S 7/295; G01S 13/42; G01S 13/867;
G01S 13/89; G01S 13/931;** G01S 13/58;
G01S 2013/93271

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.05.2023 CN 202310630109**

(71) Applicant: **Chongqing Changan Automobile Co.,
Ltd.
Chongqing 400023 (CN)**

(72) Inventors:
• **LIU, Hui**
  **Chongqing 400023 (CN)**
• **REN, Fan**
  **Chongqing 400023 (CN)**
• **CHEN, Jianbin**
  **Chongqing 400023 (CN)**
• **XIONG, Xinli**
  **Chongqing 400023 (CN)**
• **XIE, Binyang**
  **Chongqing 400023 (CN)**

(74) Representative: **M. Zardi & Co S.A.
Via G. B. Pioda, 6
6900 Lugano (CH)**

(54) **METHOD AND APPARATUS FOR ASSOCIATING RADAR TARGET WITH VISUAL TARGET, VEHICLE, AND STORAGE MEDIUM**

(57)     Disclosed are a method and apparatus for associating a radar target with a visual target, a vehicle, and a storage medium. The method includes: acquiring radar observation data and visual observation data; determining a forward-looking new fusion target based on the visual observation target, and determining radar target state quantity based on the radar observation data; calculating a Mahalanobis distance between the radar target state quantity and the forward-looking new fusion target; projecting, in a case that the Mahalanobis distance satisfies a preset association condition, the radar target state quantity to an image layer of the forward-looking new fusion target to generate projected target state quantity; determining target associated state quantity based on a point cloud position of the projected target state quantity and the Mahalanobis distance; and associating the target associated state quantity with the forward-looking new fusion target. A radar target is associated with a forward-looking new fusion target based on the Mahalanobis distance and a point cloud position of projected target state quantity that is projected to an image layer, which improves the accuracy of a fusion position.

FIG. 1

**Description**

**Field of the Invention**

The present disclosure relates to the technical field of automobile electric appliances, and specifically, to a method and apparatus for associating a radar target with a visual target, a vehicle, and a storage medium.

**Background of the Invention**

The multi-sensor multi-target tracking technology is a comprehensive high and new technology, which involves a variety of technologies in many different fields, including track receiving and pre-processing, track creation, target track association, tracking maintenance or tracking algorithms (for completing filtering and prediction of a tracking target), track elimination (for terminating a track that is unnecessary or cannot be tracked), performance evaluation, and the like. Data association is the core technology in multi-target tracking. Over the years, there has been a great deal of research on related data, and great progress due to the emphasis on this technology. However, observed state quantities of sensors tend to be quite different. Therefore, a method of comparing the similarity between an observed value and state quantity of a track will lead to a situation where observations of a visual sensor and a radar sensor of the same target cannot be associated, and consequently the accuracy of a target fusion position of the visual sensor and the radar sensor is low.

**Summary of the Invention**

A first objective of the present disclosure is to provide a method for associating a radar target with a visual target in order to solve the problem of low accuracy of a target fusion position of a visual sensor and a radar sensor in the prior art. A second objective is to provide an apparatus for associating a radar target with a visual target. A third objective is to provide a vehicle. A fourth objective is to provide a storage medium.
In order to achieve the foregoing objectives, the present disclosure adopts the following technical solutions.
A method for associating a radar target with a visual target includes:

acquiring radar observation data and visual observation data;

determining a forward-looking new fusion target based on the visual observation data, and determining radar target state quantity based on the radar observation data;

calculating a Mahalanobis distance between the radar target state quantity and the forward-looking new fusion target;

projecting, in a case that the Mahalanobis distance satisfies a preset association condition, the radar target state quantity to an image layer of the forward-looking new fusion target to generate projected target state quantity;

determining target associated state quantity based on a point cloud position of the projected target state quantity and the Mahalanobis distance; and

associating the target associated state quantity with the forward-looking new fusion target.

Optionally, the method further includes:
updating a track based on an association relationship between the target associated state quantity and the forward-looking new fusion target.
Optionally, the calculating a Mahalanobis distance between the radar target state quantity and the forward-looking new fusion target includes:
calculating the Mahalanobis distance between the radar target state quantity and the forward-looking new fusion target based on the same moment.
Optionally, the preset association condition is that the Mahalanobis distance is less than a preset distance threshold, and the projecting, in a case that the Mahalanobis distance satisfies a preset association condition, the radar target state quantity to an image layer of the forward-looking new fusion target to generate projected target state quantity includes:
projecting, in a case that the Mahalanobis distance is less than the preset distance threshold, the radar target state quantity to the image layer of the forward-looking new fusion target to generate the projected target state quantity.
Optionally, the projecting the radar target state quantity to an image layer of the forward-looking new fusion target to generate projected target state quantity includes:

projecting the radar target state quantity to a camera coordinate system corresponding to the visual observation data to generate first projected state quantity; and

projecting the first projected state quantity to the image layer of the forward-looking new fusion target to generate the projected target state quantity.

Optionally, the determining target associated state quantity based on a point cloud position of the projected target state quantity and the Mahalanobis distance includes:

determining whether the point cloud position of the projected target state quantity is in a detection frame corresponding to the forward-looking new fusion target; and

determining, in a case that the point cloud position of the projected target state quantity is in the detection frame corresponding to the forward-looking new fusion target, projected target state quantity with the smallest Mahalanobis distance as the target associated state quantity.

Optionally, after the acquiring radar observation data and visual observation data, the method further includes: filtering out abnormal observation data from the radar observation data and the visual observation data.
Optionally, after the acquiring radar observation data and visual observation data, the method further includes: synchronizing the radar observation data and the visual observation data to the same time.
Optionally, after the synchronizing the radar observation data and the visual observation data to the same time, the method further includes:
synchronizing the radar observation data and the visual observation data to the same space.
An apparatus for associating a radar target with a visual target includes:

an acquisition module, configured to acquire radar observation data and visual observation data;

a first determination module, configured to determine a forward-looking new fusion target based on the visual observation data, and determine radar target state quantity based on the radar observation data;

a calculation module, configured to calculate a Mahalanobis distance between the radar target state quantity and the forward-looking new fusion target;

a projection module, configured to project, in a case that the Mahalanobis distance satisfies a preset association condition, the radar target state quantity to an image layer of the forward-looking new fusion target to generate projected target state quantity;

an association determining module, configured to determine target associated state quantity based on a point cloud position of the projected target state quantity and the Mahalanobis distance; and

a target associating module, configured to associate the target associated state quantity with the forward-looking new fusion target.

A vehicle includes a processor, a memory, and a computer program that is stored in the memory and is capable of running on the processor. The computer program, when executed by the processor, implements the steps of the foregoing method for associating a radar target with a visual target.
A computer-readable storage medium is provided, which stores a computer program. The computer program, when executed by a processor, implements the steps of the foregoing method for associating a radar target with a visual target.
The present disclosure has the following beneficial effects.
According to the present disclosure, a radar target is projected to an image layer of a visual target, so that the radar target can be associated with a forward-looking new fusion target of the visual target in the same layer. Then, the radar target is associated with the forward-looking new fusion target based on a Mahalanobis distance and a point cloud position of projected target state quantity projected to the image layer, which improves the accuracy of a fusion position.

## Brief Description of the Drawings

FIG. 1 is a flowchart of steps in a method for associating a radar target with a visual target according to an embodiment of the present disclosure;

FIG. 2 is a flowchart of steps in another method for associating a radar target with a visual target according to an embodiment of the present disclosure;

FIG. 3 is a flowchart of steps in a method for associating a radar target with a visual target according to an example of the present disclosure;

FIG. 4 is a structural block diagram of an apparatus for associating a radar target with a visual target according to an embodiment of the present disclosure;

FIG. 5 is a structural block diagram of a vehicle according to an embodiment of the present disclosure; and

FIG. 6 is a structural block diagram of a storage medium according to an embodiment of the present disclosure.

## Detailed Description of the Embodiments

Implementations of the present disclosure will be described below with reference to the drawings and preferred embodiments. Those skilled in the art can easily understand other advantages and effects of the present disclosure from the content disclosed in the present description. The present disclosure can further be implemented or applied through other different specific implementations. Various details in the present description can also be modified or changed in various ways based on different viewpoints and applications without departing from the spirit of the present disclosure. It should be understood that the preferred embodiments are used to describe the present disclosure but are not intended to limit the scope of protection of the present disclosure.

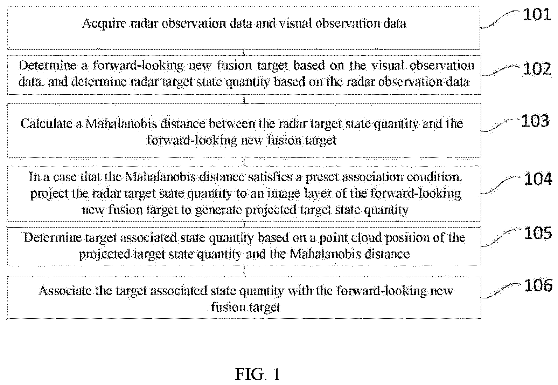

FIG. 1 is a flowchart of steps in a method for associating a radar target with a visual target according to an embodiment of the present disclosure. The method may be specifically applied to a vehicle-mounted terminal on a vehicle. The vehicle-mounted terminal is connected to various sensors or performing structures deployed on the vehicle, to receive or transmit a related data signal. The method for associating a radar target with a visual target may specifically include the following sub-steps.

In a step of 101, radar observation data and visual observation data are acquired.

In an embodiment of the present disclosure, radar observation data obtained by a radar by detecting the front of the vehicle may be acquired from the radar, and visual observation data obtained by a visual sensor by detecting the front of the vehicle may be acquired from the visual sensor. Specifically, the data may be acquired through a communication link between the vehicle-mounted terminal and the radar or the visual sensor.

In a step of 102, a forward-looking new fusion target is determined based on the visual observation data, and radar target state quantity is determined based on the radar observation data.

After the radar observation data and the visual observation data are obtained, a forward-looking new fusion target in front of the vehicle at a preset longitudinal distance may be determined based on the visual observation data. Point cloud position state data of the radar with respect to a target in front of the vehicle, namely, radar target state quantity, may further be determined based on the radar observation data.

In a step of 103, a Mahalanobis distance between the radar target state quantity and the forward-looking new fusion target is calculated.

The Mahalanobis distance between the radar target state quantity and the forward-looking new fusion target is calculated, which is used for characterizing a difference between the radar target state quantity and the forward-looking new fusion target. The difference between the radar target state quantity and the forward-looking new fusion target is directly proportional to the Mahalanobis distance. That is, the smaller the Mahalanobis distance, the smaller the difference between the radar target state quantity and the forward-looking new fusion target. On the contrary, the larger the Mahalanobis distance, the larger the difference between the radar target state quantity and the forward-looking new fusion target.

In a step of 104, in a case that the Mahalanobis distance satisfies a preset association condition, the radar target state quantity is projected to an image layer of the forward-looking new fusion target to generate projected target state quantity.

In a case that the Mahalanobis distance satisfies the preset association condition, which means that the difference between the radar target state quantity and the forward-looking new fusion target meets the requirements, the radar target state quantity may be projected to the image layer of the forward-looking new fusion target, that is, the radar target state quantity is projected to an image layer coordinate system of a visual target. The radar target state quantity is projected to a visual imaging layer to generate the projected target state quantity, so that a radar target can be associated and fused with the visual forward-looking new fusion target in the same layer.

In a step of 105, target associated state quantity is determined based on a point cloud position of the projected target state quantity and the Mahalanobis distance.

Then, it is determined that a point cloud detected by the radar will be within a detection range of the visual sensor based on the point cloud position of the projected target state quantity after projection, and a point cloud corresponding to appropriate projected target state quantity is determined as the target associated state quantity based on the point cloud position of the projected target state quantity and the Mahalanobis distance.

In a step of 106, the target associated state quantity is associated with the forward-looking new fusion target.

The target associated state quantity is associated and fused with the forward-looking new fusion target, to realize target association between multiple sensors.

In the embodiments of the present disclosure, the radar observation data and the visual observation data are acquired; the forward-looking new fusion target is determined based on the visual observation data, and the radar target state quantity is determined based on the radar observation data; the Mahalanobis distance between the radar target state quantity and the forward-looking new fusion target is calculated; in a case that the Mahalanobis distance satisfies the preset association condition, the radar target state quantity is projected to the image layer of the forward-looking new fusion target to generate the projected target state quantity; the target associated state quantity is determined based on the point cloud position of the projected target state quantity and the Mahalanobis distance; and the target associated state quantity is associated with the forward-looking new fusion target. The radar target is associated with the forward-looking new fusion target based on the Mahalanobis distance and the point cloud position of the projected target state quantity that is projected to the image layer, which improves the accuracy of a fusion position.

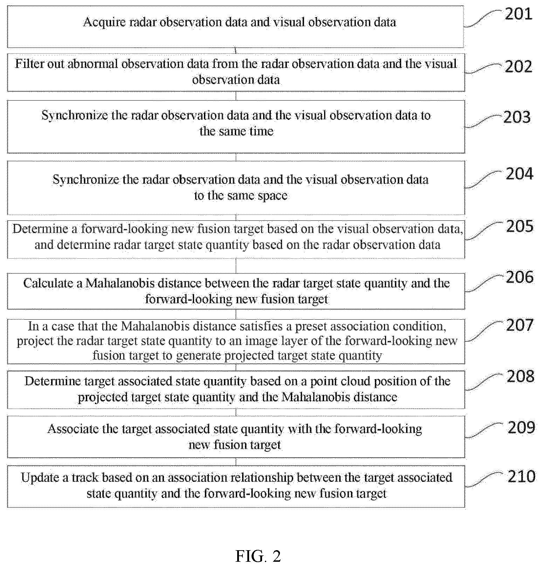

FIG. 2 is a flowchart of steps in another method for associating a radar target with a visual target according to an embodiment of the present disclosure. The method may be specifically applied to a vehicle-mounted terminal on a vehicle. The vehicle-mounted terminal is connected to various sensors or performing structures deployed on the vehicle, to receive or transmit a related data signal. The method for associating a radar target with a visual target may specifically include the following sub-steps.

In a step of 201, radar observation data and visual observation data are acquired.

In an embodiment of the present disclosure, when detecting that the vehicle is powered on, the vehicle-mounted terminal may acquire radar observation data from a radar and acquire visual observation data from a visual sensor.

In a step of 202, abnormal observation data is filtered out from the radar observation data and the visual observation data.

After the radar observation data and the visual observation data are obtained, the radar observation data and the visual observation data are pre-processed. Abnormal observation data in the radar observation data and abnormal observation data in the visual observation data are filtered out, that is, noise is filtered out from the radar observation data and the visual observation data. A noise filtering method may be set by those skilled in the art according to actual needs, and is not limited in the embodiments of the present disclosure.

In a step of 203, the radar observation data and the visual observation data are synchronized to the same time.

The radar observation data and the visual observation data may be synchronized to the same time, so that the radar observation data is associated and fused with the visual observation data based on the same time dimension to ensure the association accuracy.

In a step of 204, the radar observation data and the visual observation data are synchronized to the same space.

In an embodiment of the present disclosure, the radar observation data and the visual observation data may be synchronized to the same space, so that the radar observation data is associated and fused with the visual observation data based on the same space dimension to ensure the association accuracy.

In addition, the performing order of step 204 and step 203 is not limited. Those skilled in the art may set an appropriate performing order as needed or perform the steps at the same time, and the performing order is not limited in the embodiments of the present disclosure.

In a step of 205, a forward-looking new fusion target is determined based on the visual observation data, and radar target state quantity is determined based on the radar observation data.

The visual observation data and the radar observation data subjected to noise filtering and time and space synchronization are processed. The forward-looking new fusion target that needs to be fused may be determined based on the visual observation data. The forward-looking new fusion target may be a target 120 meters away from the vehicle. Moreover, the radar target state quantity may be determined based on the radar observation data.

In a step of 206, a Mahalanobis distance between the radar target state quantity and the forward-looking new fusion target is calculated.

The Mahalanobis distance between the radar target state quantity and the forward-looking new fusion target is calculated, that is, a Mahalanobis distance between a measured value of the radar and a track of the vehicle, and a difference is determined based on the Mahalanobis distance.

In an optional embodiment of the present disclosure, the step of calculating a Mahalanobis distance between the radar target state quantity and the forward-looking new fusion target includes:

In a sub-step of S2061, the Mahalanobis distance between the radar target state quantity and the forward-looking new fusion target is calculated based on the same moment.

Radar target state quantity and a forward-looking new fusion target at the same moment are determined, and a Mahalanobis distance at this moment is calculated. Specifically, a formula for calculating a Mahalanobis distance is as follows:

$$D_M(x, y) = \sqrt{(x - y)^T \Sigma^{-1}(x - y)}$$

where, a data point x and a data point y represent the radar target state quantity and the forward-looking new fusion target at this moment, respectively, and $\Sigma$ is a random variable covariance matrix.

In a step of 207, in a case that the Mahalanobis distance satisfies a preset association condition, the radar target state quantity is projected to an image layer of the forward-looking new fusion target to generate projected target state quantity.

After the Mahalanobis distance is obtained, whether the Mahalanobis distance satisfies the preset association condition may be determined. In a case that the Mahalanobis distance does not satisfy the preset association condition, that is, the different between the radar target state quantity and the forward-looking new fusion target is large, it may be determined that the radar target state quantity is not associated with the forward-looking new fusion target.

In a case that the Mahalanobis distance satisfies the preset association condition, that is, the difference between the radar target state quantity and the forward-looking new fusion target is small, the radar target state quantity is taken as a candidate association target, and projected to the image layer of the forward-looking new fusion target to generate the projected target state quantity, and the radar target state quantity is associated with the forward-looking new fusion target in the image layer.

In an optional embodiment of the present disclosure, the preset association condition is that the Mahalanobis distance is less than a preset distance threshold, and the step of projecting, in a case that the Mahalanobis distance satisfies a preset association condition, the radar target state quantity to an image layer of the forward-looking new fusion target to generate projected target state quantity includes:

In a sub-step of S2071, in a case that the Mahalanobis distance is less than the preset distance threshold, the radar target state quantity is projected to the image layer of the forward-looking new fusion target to generate the projected target state quantity.

The preset distance threshold may be set according to actual needs, and is not limited in the embodiments of the present disclosure. When the Mahalanobis distance between the radar target state quantity of the front target that is detected by the radar and the forward-looking new fusion target is less than the preset distance threshold, the front radar target is taken as a candidate association target, the radar target state quantity is projected to the image layer of the forward-looking new fusion target to generate the projected target state quantity.

Specifically, the step of projecting the radar target state quantity to an image layer of the forward-looking new fusion target to generate projected target state quantity includes: the radar target state quantity is projected to a camera coordinate system corresponding to the visual observation data to generate first projected state quantity; and the first projected state quantity is projected to the image layer of the forward-looking new fusion target to generate the projected target state quantity.

The radar target state quantity, namely, a point cloud to which a candidate radar target belongs, is transformed from a vehicle coordinate system to the camera coordinate system corresponding to the visual observation data. Both the vehicle coordinate system and the camera coordinate system belong to three-dimensional space, and a main difference between the two is that origins of coordinates and directions of various axes are different. Therefore, only rotation and translation are performed. A specific transformation formula is as follows:

$$\begin{bmatrix} X_C \\ Y_C \\ Z_C \\ 1 \end{bmatrix} = \begin{bmatrix} R & T \\ 0^T & 1 \end{bmatrix} \begin{bmatrix} X_W \\ Y_W \\ Z_W \\ 1 \end{bmatrix}$$

where, R is a 3×3 rotation matrix, and T is a 3×1 translation matrix.

The first projected state quantity is generated through the foregoing transformation. Then, after the radar point cloud is transformed to the camera coordinate system, the radar point cloud needs to be projected from the camera coordinate system to an image coordinate system. There is a perspective projection relationship between the camera coordinate system and the image coordinate system. A specific projection formula is as follows:

$$Z_C \begin{bmatrix} x \\ y \\ 1 \end{bmatrix} = \begin{bmatrix} f & 0 & 0 & 0 \\ 0 & f & 0 & 0 \\ 0 & 0 & 1 & 0 \end{bmatrix} = \begin{bmatrix} X_C \\ Y_C \\ Z_C \\ 1 \end{bmatrix}$$

where, f is a focal length of a camera, and (x, y) is coordinates of a projection point.

There is a translation transformation relationship between the image coordinate system and a pixel coordinate system of imaging. A specific formula is as follows:

$$\begin{bmatrix} u \\ v \\ 1 \end{bmatrix} = \begin{bmatrix} \dfrac{1}{dx} & 0 & u_0 \\ 0 & \dfrac{1}{dy} & v_0 \\ 0 & 0 & 1 \end{bmatrix} \begin{bmatrix} x \\ y \\ 1 \end{bmatrix}$$

where, dx and dy are a length and a width of a single pixel on an image plane, respectively, and $(u_0, v_0)$ is coordinates of an origin of the image coordinate system in the pixel coordinate system. That is, a final image layer transformation relationship between the radar and the visual sensor is as follows:

$$Z_C \begin{bmatrix} u \\ v \\ 1 \end{bmatrix} = \begin{bmatrix} \dfrac{1}{dx} & 0 & u_0 \\ 0 & \dfrac{1}{dy} & v_0 \\ 0 & 0 & 1 \end{bmatrix} \begin{bmatrix} f & 0 & 0 & 0 \\ 0 & f & 0 & 0 \\ 0 & 0 & 1 & 0 \end{bmatrix} \begin{bmatrix} R & T \\ 0^T & 1 \end{bmatrix} \begin{bmatrix} X_W \\ Y_W \\ Z_W \\ 1 \end{bmatrix}$$

The projected target state quantity in the imaging plane, namely, the image layer, after projection is calculated by using the formula.

In a step of 208, target associated state quantity is determined based on a point cloud position of the projected target state quantity and the Mahalanobis distance.

After the Mahalanobis distance and the projected target state quantity are obtained, point clouds in the projected target state quantity are further filtered based on the point cloud position of the projected target state quantity and the Mahalanobis distance to determine the target associated state quantity, associated with the visual new fusion target, of the radar.

In an optional embodiment of the present disclosure, the step of determining target associated state quantity based on a point cloud position of the projected target state quantity and the Mahalanobis distance includes:

In a sub-step of S2081, whether the point cloud position of the projected target state quantity is in a detection frame corresponding to the forward-looking new fusion target is determined.

During detection, there is a detection frame corresponding to an object, namely, the forward-looking new fusion target. First, whether the point cloud position of the projected target state quantity is in the detection frame corresponding to the forward-looking new fusion target may be determined.

In a sub-step of S2082, in a case that the point cloud position of the projected target state quantity is in the detection frame corresponding to the forward-looking new fusion target, projected target state quantity with the smallest Mahalanobis distance is determined as the target associated state quantity.

When the point cloud position of the projected target state quantity is in the detection frame corresponding to the forward-looking new fusion target, it may be determined that a point cloud, located in the detection frame, of the projected target state quantity is close to the visual forward-looking new fusion target. Then, the point cloud, located in the detection frame, of the projected target state quantity and a point cloud with the smallest Mahalanobis distance from the forward-looking new fusion target are determined as the target associated state quantity. That is, these point clouds may be considered to be associated with the forward-looking new fusion target.

In a step of 209, the target associated state quantity is associated with the forward-looking new fusion target.

Then, the target associated state quantity is associated and fused with the forward-looking new fusion target in the image layer, so that an observed target of the radar can be associated with an observed target of the visual sensor based on a position.

In a step of 210, a track is updated based on an association relationship between the target associated state quantity and the forward-looking new fusion target.

According to the association relationship between the target associated state quantity and the forward-looking new fusion target, the fusion target is weighted and fused based on the characteristics of the visual sensor and the radar. For a radar target that is not associated with a visual new fusion target, if the radar target is a dynamic target in a current lane, and an existence period is greater than a set threshold, a new fusion target will be created for the radar target. State prediction is performed on a fusion target that is not associated with visual and radar targets, after the number of predictions exceeds a certain set threshold, the fusion target is eliminated, and is no longer associated with radar observation data. In this way, the track of the vehicle is updated.

In the embodiments of the present disclosure, the radar observation data and the visual observation data are acquired; and the abnormal observation data are filtered out from the radar observation data and the visual observation data. The radar observation data and the visual observation data are synchronized to the same time. The radar observation data and the visual observation data are synchronized to the same space. The forward-looking new fusion target is determined based on the visual observation data, and the radar target state quantity is determined based on the radar observation data. The Mahalanobis distance between the radar target state quantity and the forward-looking new fusion target is calculated. In a case that the Mahalanobis distance satisfies the preset association condition, the radar target state quantity is projected to the image layer of the forward-looking new fusion target to generate the projected target state quantity. The target associated state quantity is determined based on the point cloud position of the projected target state quantity and the Mahalanobis distance. The target associated state quantity is associated with the forward-looking new fusion target. The track is updated based on the association relationship between the target associated state quantity and the forward-looking new fusion target. Invalid data is removed by filtering original data, to improve the association accuracy. Time and space synchronization is performed on the radar observation data and the visual observation data, so that the data can be compared on the same dimension, and a time or space transformation error is reduced. Furthermore, the phenomenon of data explosion can be avoided based on the smallest Mahalanobis distance and determination of whether a point cloud projected to the image layer is in the detection frame, to improve the data processing efficiency. The radar target is associated with the forward-looking new fusion target of the visual sensor, so that the accuracy of a fusion target position is improved.

In order to enable those skilled in the art to understand the embodiments of the present disclosure better, the embodiments of the present disclosure will be described below with reference to an example.

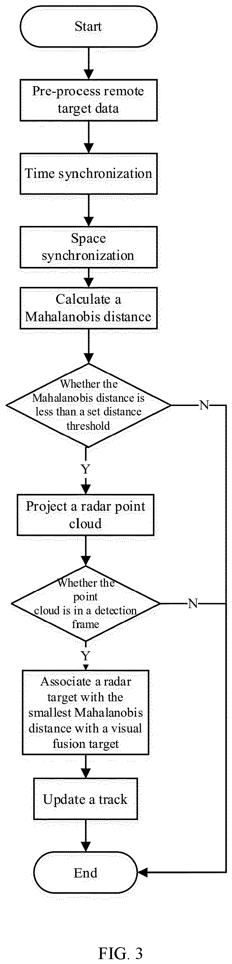

FIG. 3 is a flowchart of a method for associating a radar target with a visual target according to an example of the present disclosure.

In a first step, abnormal data is filtered out and removed from radar observation data of a radar and visual observation data of a visual sensor, and for observed target state quantity, a relative longitudinal velocity, relative longitudinal acceleration, and the like of the visual and radar sensors, an absolute longitudinal velocity and absolute longitudinal acceleration of a radar target need to be calculated based on a velocity and longitudinal acceleration of a vehicle.

In a second step, because of different installation positions of the radar and the visual sensor, the radar observation data and the visual observation data are synchronized to a world coordinate system with the same reference origin of the vehicle, and in addition, because data transmission cycles of the radar and the visual sensor are also different, the radar observation and the visual observation data should be synchronized to the same time based on the same time reference.

In a third step, target association is performed. For a target with a longitudinal distance greater than 120 m from the vehicle, namely, a forward-looking new fusion target, a Mahalanobis distance between the radar target and the new fusion target is calculated. In a case that the Mahalanobis distance between the radar target and the forward-looking new fusion target is less than a set Mahalanobis distance threshold, the radar target is taken as a candidate association target. A point cloud to which the candidate front radar target belongs is transformed from the world coordinate system to a camera coordinate system. After the radar point cloud is transformed to the camera coordinate system, the radar point cloud further needs to be projected from the camera coordinate system to an image coordinate system. After the radar point cloud is transformed to a pixel coordinate system, whether the point cloud is in a detection frame is determined. In a case that the point cloud to which the radar target belongs is in the detection frame and the Mahalanobis distance between the radar target and the visual new fusion target is the smallest, the radar target is considered to be associated with the fusion target.

In a fourth step, a track is updated. For a radar target that is not associated with a visual new fusion target, if the target is a dynamic target in a current lane, and an existence period is greater than a set threshold, a new fusion target will be created for the radar target. For a fusion target that is associated with both a radar target and a visual target, the fusion target is weighted and fused based on the characteristics of the sensors. State prediction is performed on a fusion target that is not associated with visual and radar targets, and after the number of predictions exceeds a certain threshold, the fusion target is eliminated.

It should be noted that for the purpose of simple description, the method embodiments are expressed as combinations of a series of actions. However, those skilled in the art should know that the embodiments of the present disclosure are not limited to the described order of actions. According to the embodiments of the present disclosure, some steps may be performed in another order or performed at the same. Moreover, those skilled in the art should know that the embodiments described in the present description are all preferred embodiments, and the involved actions are not necessarily necessary for the embodiments of the present disclosure.

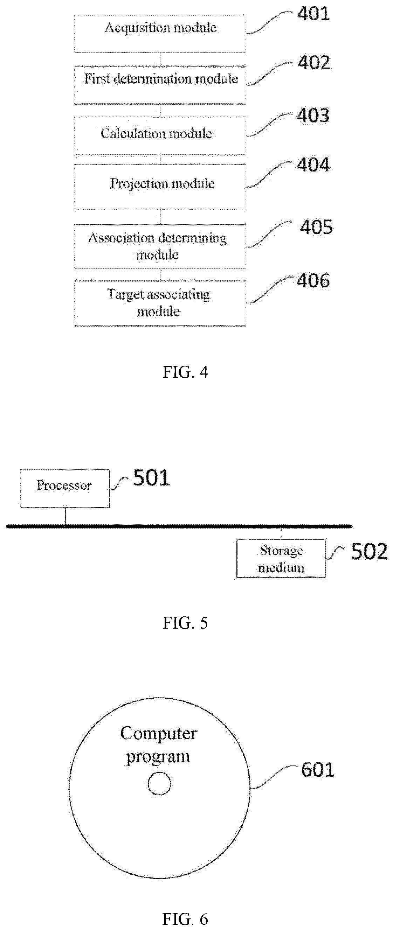

FIG. 4 is a structural block diagram of an apparatus for associating a radar target with a visual target according to an embodiment of the present disclosure. The apparatus for associating a radar target with a visual target may specifically include the following modules:

an acquisition module 401, configured to acquire radar observation data and visual observation data;

a first determination module 402, configured to determine a forward-looking new fusion target based on the visual observation data, and determine radar target state quantity based on the radar observation data;

a calculation module 403, configured to calculate a Mahalanobis distance between the radar target state quantity and the forward-looking new fusion target;

a projection module 404, configured to project, in a case that the Mahalanobis distance satisfies a preset association condition, the radar target state quantity to an image layer of the forward-looking new fusion target to generate projected target state quantity;

an association determining module 405, configured to determine target associated state quantity based on a point cloud position of the projected target state quantity and the Mahalanobis distance; and

a target associating module 406, configured to associate the target associated state quantity with the forward-looking new fusion target.

In an optional embodiment of the present disclosure, the apparatus further includes:
a track updating module, configured to update a track based on an association relationship between the target associated state quantity and the forward-looking new fusion target.
In an optional embodiment of the present disclosure, the calculation module 403 includes:
a calculation sub-module, configured to calculate the Mahalanobis distance between the radar target state quantity and the forward-looking new fusion target based on the same moment.
In an optional embodiment of the present disclosure, the preset association condition is that the Mahalanobis distance is less than a preset distance threshold, and the association determining module 405 includes:
a projection sub-module, configured to project, in a case that the Mahalanobis distance is less than the preset distance threshold, the radar target state quantity to the image layer of the forward-looking new fusion target to generate the projected target state quantity.
In an optional embodiment of the present disclosure, the projection sub-module includes:

a first projection unit, configured to project the radar target state quantity to a camera coordinate system corresponding to the visual observation data to generate first projected state quantity; and

a second projection unit, configured to project the first projected state quantity to the image layer of the forward-looking new fusion target to generate the projected target state quantity.

In an optional embodiment of the present disclosure, the association determining module 405 includes:

a determination sub-module, configured to determine whether the point cloud position of the projected target state quantity is in a detection frame corresponding to the forward-looking new fusion target; and

a target associated state quantity determining sub-module, configured to determine projected target state quantity with the smallest Mahalanobis distance as the target associated state quantity in a case that the point cloud position of the projected target state quantity is in the detection frame corresponding to the forward-looking new fusion target.

In an optional embodiment of the present disclosure, the apparatus further includes:
a pre-processing module, configured to filter out abnormal observation data from the radar observation data and the visual observation data.
In an optional embodiment of the present disclosure, the apparatus further includes:
a time synchronization module, configured to synchronize the radar observation data and the visual observation data to the same time.
In an optional embodiment of the present disclosure, the apparatus further includes:
a space synchronization module, configured to synchronize the radar observation data and the visual observation data to the same space.
The apparatus embodiments are simply described because they are basically similar to the method embodiments. For relevant details, refer to the partial description of the method embodiments.
Refer to FIG. 5. An embodiment of the present disclosure further provides a vehicle, which includes:
a processor 501 and a storage medium 502. The storage medium 502 stores a computer program that can be executed by the processor 501. When the vehicle runs, the processor 501 executes the computer program, to perform the method for associating a radar target with a visual target according to any one of the embodiments of the present disclosure. The method for associating a radar target with a visual target includes:

radar observation data and visual observation data are acquired;

a forward-looking new fusion target is determined based on the visual observation data, and radar target state quantity is determined based on the radar observation data;

a Mahalanobis distance between the radar target state quantity and the forward-looking new fusion target is calculated;

in a case that the Mahalanobis distance satisfies a preset association condition, the radar target state quantity is projected to an image layer of the forward-looking new fusion target to generate projected target state quantity;

target associated state quantity is determined based on a point cloud position of the projected target state quantity and the Mahalanobis distance; and

the target associated state quantity is associated with the forward-looking new fusion target.

Optionally, the method further includes:
a track is updated based on an association relationship between the target associated state quantity and the forward-looking new fusion target.
Optionally, the step of calculating a Mahalanobis distance between the radar target state quantity and the forward-looking new fusion target includes:
the Mahalanobis distance between the radar target state quantity and the forward-looking new fusion target is calculated based on the same moment.
Optionally, the preset association condition is that the Mahalanobis distance is less than a preset distance threshold, and the step of projecting, in a case that the Mahalanobis distance satisfies a preset association condition, the radar target state quantity to an image layer of the forward-looking new fusion target to generate projected target state quantity includes:

in a case that the Mahalanobis distance is less than the preset distance threshold, the radar target state quantity is projected to the image layer of the forward-looking new fusion target to generate the projected target state quantity.

Optionally, the step of projecting the radar target state quantity to an image layer of the forward-looking new fusion target to generate projected target state quantity includes:

the radar target state quantity is projected to a camera coordinate system corresponding to the visual observation data to generate first projected state quantity; and

the first projected state quantity is projected to the image layer of the forward-looking new fusion target to generate the projected target state quantity.

Optionally, the step of determining target associated state quantity based on a point cloud position of the projected target state quantity and the Mahalanobis distance includes:

whether the point cloud position of the projected target state quantity is in a detection frame corresponding to the forward-looking new fusion target is determined; and

in a case that the point cloud position of the projected target state quantity is in the detection frame corresponding to the forward-looking new fusion target, projected target state quantity with the smallest Mahalanobis distance is determined as the target associated state quantity.

Optionally, after the step of acquiring radar observation data and visual observation data, the method further includes:
abnormal observation data is filtered out from the radar observation data and the visual observation data.

Optionally, after the step of acquiring radar observation data and visual observation data, the method further includes:
the radar observation data and the visual observation data are synchronized to the same time.

Optionally, after the step of synchronizing the radar observation data and the visual observation data to the same time, the method further includes:
the radar observation data and the visual observation data are synchronized to the same space.

The memory may include a random access memory (RAM), and may also include a non-volatile memory, such as at least one disk memory. Optionally, the memory may further be at least one storage apparatus located remotely from the foregoing processor.

The foregoing processor may be a general-purpose processor, which includes a central processing unit (CPU), a network processor (NP), and the like, and may also be a digital signal processor (DSP), an application specific integrated circuit (ASIC), a field-programmable gate array (FPGA) or another programmable logic device, a discrete gate or transistor logic device, or a discrete hardware component.

Refer to FIG. 6. An embodiment of the present disclosure further provides a computer-readable storage medium 601. The storage medium 601 stores a computer program. When the computer program is executed by a processor, the method for associating a radar target with a visual target according to any one of the embodiments of the present disclosure is performed. The method for associating a radar target with a visual target includes:

radar observation data and visual observation data are acquired;

a forward-looking new fusion target is determined based on the visual observation data, and radar target state quantity is determined based on the radar observation data;

a Mahalanobis distance between the radar target state quantity and the forward-looking new fusion target is calculated;

in a case that the Mahalanobis distance satisfies a preset association condition,

the radar target state quantity is projected to an image layer of the forward-looking new fusion target to generate projected target state quantity;

target associated state quantity is determined based on a point cloud position of the projected target state quantity and the Mahalanobis distance; and

the target associated state quantity is associated with the forward-looking new fusion target.

Optionally, the method further includes:
a track is updated based on an association relationship between the target associated state quantity and the forward-looking new fusion target.

Optionally, the step of calculating a Mahalanobis distance between the radar target state quantity and the forward-looking new fusion target includes:
the Mahalanobis distance between the radar target state quantity and the forward-looking new fusion target is calculated based on the same moment.

Optionally, the preset association condition is that the Mahalanobis distance is less than a preset distance threshold, and the step of projecting, in a case that the Mahalanobis distance satisfies a preset association condition, the radar target state quantity to an image layer of the forward-looking new fusion target to generate projected target state quantity includes:
in a case that the Mahalanobis distance is less than the preset distance threshold, the radar target state quantity is projected to the image layer of the forward-looking new fusion target to generate the projected target state quantity.

Optionally, the step of projecting the radar target state quantity to an image layer of the forward-looking new fusion target to generate projected target state quantity includes:

the radar target state quantity is projected to a camera coordinate system corresponding to the visual observation data to generate first projected state quantity; and

the first projected state quantity is projected to the image layer of the forward-looking new fusion target to generate the projected target state quantity.

Optionally, the step of determining target associated state quantity based on a point cloud position of the projected target state quantity and the Mahalanobis distance includes:

whether the point cloud position of the projected target state quantity is in a detection frame corresponding to the forward-looking new fusion target is determined; and

in a case that the point cloud position of the projected target state quantity is in the detection frame corresponding to the forward-looking new fusion target, projected target state quantity with the smallest Mahalanobis distance is determined as the target associated state quantity.

Optionally, after the step of acquiring radar observation data and visual observation data, the method further includes:
abnormal observation data is filtered out from the radar observation data and the visual observation data.

Optionally, after the step of acquiring radar observation data and visual observation data, the method further includes:
the radar observation data and the visual observation data are synchronized to the same time.

Optionally, after the step of synchronizing the radar observation data and the visual observation data to the same time, the method further includes:
the radar observation data and the visual observation data are synchronized to the same space.

The various embodiments in the present description are described in a progressive manner. Each embodiment focuses on its difference from other embodiments. The same and similar parts between the various embodiments can be referred to each other.

Those skilled in the art should understand that the embodiments of the present disclosure may be provided as a method, an apparatus, or a computer program product. Therefore, the embodiments of the present disclosure may take the form of a full hardware embodiment, a full software embodiment, or an embodiment that combines software and hardware. Moreover, the embodiments of the present disclosure may take the form of a computer program product embodied on one or more computer-usable storage media (including, but not limited to, a disk memory, a compact disc-read only memory (CD-ROM), an optical memory, and the like) containing computer-usable program code.

The embodiments of the present disclosure are described with reference to the flowcharts and/or block diagrams of the method, the terminal device (system), and the computer program product according to the embodiments of the present disclosure. It should be understood that each process and/or block in the flowchart and/or block diagram, as well as a combination of processes and/or blocks in the flowchart and/or block diagram may be implemented by computer program instructions. These computer program instructions may be provided to a process of a general-purpose computer, a special-purpose computer, an embedded processor or another programmable data processing terminal device to produce a machine, so that the instructions executed by the processor of the computer or another programmable data processing terminal device produce an apparatus for performing functions specified in one or more processes in the flowchart and/or one or more blocks in the block diagram.

These computer program instructions may also be stored in a computer-readable memory that causes a computer or another programmable data processing terminal device to operate in a particular manner, so that the instructions stored in the computer-readable memory produce an article of manufacture including an instruction apparatus. The instruction apparatus performs functions specified in one or more processes in the flowchart and/or one or more blocks in the block diagram.

These computer program instructions may also be loaded onto a computer or another programmable data processing terminal device, so that a series of operating steps are performed on the computer or another programmable terminal device to produce computer-implemented processing. Therefore, the instructions executed on the computer or another programmable terminal device provide steps for performing functions specified in one or more processes in the flowchart and/or one or more blocks in the block diagram.

Although the preferred embodiments of the present disclosure have been described, those skilled in the art can make other changes and modifications to these embodiments once they understand the basic inventive concept. Therefore, the appended claims are intended to be construed as including the preferred embodiments and all changes and modifications that fall within the scope of the embodiments of the present disclosure.

Finally, it should be noted that relational terms such as first and second herein are merely used to distinguish one entity or operation from another entity or operation and do not necessarily require or imply the existence of any such actual relationship or sequence between these entities or operations. Furthermore, the term "include", "contain", or any other variation thereof is intended to cover a non-exclusive inclusion, so that a process, method, article or terminal device that includes a series of elements includes not only those elements, but also other elements not expressly listed, or further includes elements inherent to the process, method, article or terminal device. In the absence of further limitation, an element defined by the sentence "includes a..." does not exclude the presence of additional identical elements in a process, method, article or terminal device that includes the stated element.

The method and apparatus for associating a radar target with a visual target, the vehicle, and the storage medium of the present disclosure have been described above in detail. The principles and implementations of the present disclosure are described with reference to specific examples herein. The description of the foregoing embodiments is merely used to help understanding of the method and its core idea of the present disclosure. Moreover, those of ordinary skill in the art may make changes to the specific implementations and range of application based on the idea of the present disclosure. Based on the above, the content of the present description shall not be deemed as limiting the present disclosure.

## Claims

1. A method for associating a radar target with a visual target, comprising:

   acquiring radar observation data and visual observation data;
   determining a forward-looking new fusion target based on the visual observation data, and determining radar target state quantity based on the radar observation data;
   calculating a Mahalanobis distance between the radar target state quantity and the forward-looking new fusion target;
   projecting, in a case that the Mahalanobis distance satisfies a preset association condition, the radar target state quantity to an image layer of the forward-looking new fusion target to generate projected target state quantity;
   determining target associated state quantity based on a point cloud position of the projected target state quantity and the Mahalanobis distance; and
   associating the target associated state quantity with the forward-looking new fusion target.

2. The method according to claim 1, further comprising:
   updating a track based on an association relationship between the target associated state quantity and the forward-looking new fusion target.

3. The method according to claim 1, wherein the calculating a Mahalanobis distance between the radar target state quantity and the forward-looking new fusion target comprises:
   calculating the Mahalanobis distance between the radar target state quantity and the forward-looking new fusion target based on the same moment.

4. The method according to claim 1, wherein the preset association condition is that the Mahalanobis distance is less than a preset distance threshold, and the projecting, in a case that the Mahalanobis distance satisfies a preset association condition, the radar target state quantity to an image layer of the forward-looking new fusion target to generate projected target state quantity comprises:
   projecting, in a case that the Mahalanobis distance is less than the preset distance threshold, the radar target state quantity to the image layer of the forward-looking new fusion target to generate the projected target state quantity.

5. The method according to claim 1, wherein the projecting the radar target state quantity to an image layer of the forward-looking new fusion target to generate projected target state quantity comprises:

   projecting the radar target state quantity to a camera coordinate system corresponding to the visual observation data to generate first projected state quantity; and
   projecting the first projected state quantity to the image layer of the forward-looking new fusion target to generate the projected target state quantity.

6. The method according to claim 1, wherein the determining target associated state quantity based on a point cloud position of the projected target state quantity and the Mahalanobis distance comprises:

   determining whether the point cloud position of the projected target state quantity is in a detection frame corresponding to the forward-looking new fusion target; and
   determining, in a case that the point cloud position of the projected target state quantity is in the detection frame corresponding to the forward-looking new fusion target, projected target state quantity with the smallest Mahalanobis distance as the target associated state quantity.

7. The method according to claim 1, after the acquiring radar observation data and visual observation data, further comprising:
   filtering out abnormal observation data from the radar observation data and the visual observation data.

8. The method according to claim 1, after the acquiring radar observation data and visual observation data, further comprising:
   synchronizing the radar observation data and the visual observation data to the same time.

9. The method according to claim 8, after the synchronizing the radar observation data and the visual observation data to the same time, further comprising:
   synchronizing the radar observation data and the visual observation data to the same space.

10. An apparatus for associating a radar target with a visual target, comprising:

    an acquisition module, configured to acquire radar observation data and visual observation data;
    a first determination module, configured to determine a forward-looking new fusion target based on the visual observation data, and determine radar target state quantity based on the radar observation data;
    a calculation module, configured to calculate a Mahalanobis distance between the radar target state quantity and the forward-looking new fusion target;
    a projection module, configured to project, in a case that the Mahalanobis distance satisfies a preset association condition, the radar target state quantity to an image layer of the forward-looking new fusion target to generate projected target state quantity;
    an association determining module, configured to determine target associated state quantity based on a point cloud position of the projected target state quantity and the Mahalanobis distance; and
    a target associating module, configured to associate the target associated state quantity with the forward-looking new fusion target.

11. A vehicle, comprising a processor, a memory, and a computer program that is stored in the memory and is capable of running on the processor, wherein the computer program, when executed by the processor, implements the steps of the method for associating a radar target with a visual target according to any one of claims 1 to 9.

12. A computer-readable storage medium, wherein the computer-readable storage medium stores a computer program which, when executed by a processor, implements the steps of the method for associating a radar target with a visual target according to any one of claims 1 to 9.

| | |
|---|---|
| Acquire radar observation data and visual observation data | 101 |
| Determine a forward-looking new fusion target based on the visual observation data, and determine radar target state quantity based on the radar observation data | 102 |
| Calculate a Mahalanobis distance between the radar target state quantity and the forward-looking new fusion target | 103 |
| In a case that the Mahalanobis distance satisfies a preset association condition, project the radar target state quantity to an image layer of the forward-looking new fusion target to generate projected target state quantity | 104 |
| Determine target associated state quantity based on a point cloud position of the projected target state quantity and the Mahalanobis distance | 105 |
| Associate the target associated state quantity with the forward-looking new fusion target | 106 |

FIG. 1

| Acquire radar observation data and visual observation data | 201 |
| Filter out abnormal observation data from the radar observation data and the visual observation data | 202 |
| Synchronize the radar observation data and the visual observation data to the same time | 203 |
| Synchronize the radar observation data and the visual observation data to the same space | 204 |
| Determine a forward-looking new fusion target based on the visual observation data, and determine radar target state quantity based on the radar observation data | 205 |
| Calculate a Mahalanobis distance between the radar target state quantity and the forward-looking new fusion target | 206 |
| In a case that the Mahalanobis distance satisfies a preset association condition, project the radar target state quantity to an image layer of the forward-looking new fusion target to generate projected target state quantity | 207 |
| Determine target associated state quantity based on a point cloud position of the projected target state quantity and the Mahalanobis distance | 208 |
| Associate the target associated state quantity with the forward-looking new fusion target | 209 |
| Update a track based on an association relationship between the target associated state quantity and the forward-looking new fusion target | 210 |

FIG. 2

```
        ┌─────────────┐
        │    Start     │
        └──────┬──────┘
               │
        ┌──────▼──────────┐
        │ Pre-process remote │
        │   target data    │
        └──────┬──────────┘
               │
        ┌──────▼──────────┐
        │ Time synchronization │
        └──────┬──────────┘
               │
        ┌──────▼──────────┐
        │     Space       │
        │ synchronization │
        └──────┬──────────┘
               │
        ┌──────▼──────────┐
        │  Calculate a    │
        │ Mahalanobis distance │
        └──────┬──────────┘
               │
          ◇────▼────◇
         Whether the
     Mahalanobis distance is ──N──┐
     less than a set distance      │
          threshold                │
          ◇────┬────◇              │
               Y                   │
        ┌──────▼──────────┐        │
        │ Project a radar point │   │
        │     cloud        │       │
        └──────┬──────────┘        │
               │                   │
          ◇────▼────◇              │
         Whether the               │
            point                  │
      cloud is in a detection ──N──┤
            frame                  │
          ◇────┬────◇              │
               Y                   │
        ┌──────▼──────────┐        │
        │ Associate a radar │       │
        │ target with the   │       │
        │ smallest Mahalanobis │    │
        │ distance with a visual │  │
        │ fusion target    │       │
        └──────┬──────────┘        │
               │                   │
        ┌──────▼──────────┐        │
        │  Update a track │        │
        └──────┬──────────┘        │
               │                   │
        ┌──────▼──────────┐        │
        │     End          ◄───────┘
        └─────────────┘
```

FIG. 3

FIG. 4

FIG. 5

FIG. 6

Europäisches
Patentamt

European
Patent Office

Office européen
des brevets

# EUROPEAN SEARCH REPORT

Application Number

EP 23 21 3299

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 731 268 A (UNIV SOUTHEAST) 3 March 2023 (2023-03-03) * page 4 last paragraph, page 5 paragraph 1, 2 and last paragraph, page 6 paragraph 1-3, page 7 paragraph 1, 2 and last paragraph page 8 paragraph 2, page 9 paragraph 8 page 10 paragraph 6 * ----- | 1-12 | INV. G01S7/295 G01S13/42 G01S13/86 G01S13/89 G01S13/931 |
| X | CN 114 280 611 A (SHANGHAI INTELLIGENT NETWORK CONNECTION AUTOMOBILE TECH CENTER LIMITED) 5 April 2022 (2022-04-05) * page 2 paragraph 2, 5-7; page 3 paragraph 8; page 4 paragraph 2, 7 and last paragraph; page 5 paragraph 3, 6, 11; page 7 paragraph 1; page 8 paragraph 4; page 9 paragraph 3, 4; * ----- | 1-12 | |
| X | DE 11 2020 007433 T5 (MITSUBISHI ELECTRIC CORP [JP]) 11 May 2023 (2023-05-11) * paragraphs [0015], [0125], [0144], [0150], [0151]; figures 5, 7, 8, 10, 12, 15, 17, 19. * ----- | 1,10-12 | **TECHNICAL FIELDS SEARCHED (IPC)** G01S |
| A | CN 113 191 427 A (WUXI INTERNET OF THINGS INNOVATION CENTER CO LTD ET AL.) 30 July 2021 (2021-07-30) * page 7 paragraph 1 * ----- | 4 | |
| A | WO 2021/223368 A1 (QUANZHOU EQUIPMENT MANUFACTURING RES INSTITUTE [CN]) 11 November 2021 (2021-11-11) * paragraph [0078] * ----- | 5 | |

-/--

The present search report has been drawn up for all claims

| Place of search | Date of completion of the search | Examiner |
|---|---|---|
| Munich | 24 May 2024 | Auinger, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 23 21 3299

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/142026 A1 (BUSH LAWRENCE A [US] ET AL) 7 May 2020 (2020-05-07) * paragraph [0063] * | 6 | |
| A | CN 109 212 521 A (UNIV TONGJI) 15 January 2019 (2019-01-15) * paragraph [0074] * | 6 | |
| A | US 2019/120934 A1 (SLUTSKY MICHAEL [IL] ET AL) 25 April 2019 (2019-04-25) * paragraph [0038] * | 6 | |

TECHNICAL FIELDS
SEARCHED      (IPC)

The present search report has been drawn up for all claims

| Place of search | Date of completion of the search | Examiner |
|---|---|---|
| Munich | 24 May 2024 | Auinger, Florian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                         EP 23 21 3299

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2024

| Patent document cited in search report | Publication date | Patent family member(s) | Publication date |
|---|---|---|---|
| CN 115731268 A | 03-03-2023 | NONE | |
| CN 114280611 A | 05-04-2022 | NONE | |
| DE 112020007433 T5 | 11-05-2023 | CN 116324506 A | 23-06-2023 |
| | | DE 112020007433 T5 | 11-05-2023 |
| | | JP 7154470 B2 | 17-10-2022 |
| | | JP WO2022064588 A1 | 31-03-2022 |
| | | US 2023206600 A1 | 29-06-2023 |
| | | WO 2022064588 A1 | 31-03-2022 |
| CN 113191427 A | 30-07-2021 | NONE | |
| WO 2021223368 A1 | 11-11-2021 | CN 111352112 A | 30-06-2020 |
| | | US 2022277557 A1 | 01-09-2022 |
| | | WO 2021223368 A1 | 11-11-2021 |
| US 2020142026 A1 | 07-05-2020 | CN 111144432 A | 12-05-2020 |
| | | DE 102019115080 A1 | 07-05-2020 |
| | | US 2020142026 A1 | 07-05-2020 |
| CN 109212521 A | 15-01-2019 | NONE | |
| US 2019120934 A1 | 25-04-2019 | CN 109683144 A | 26-04-2019 |
| | | DE 102018125676 A1 | 25-04-2019 |
| | | US 2019120934 A1 | 25-04-2019 |

EPO FORM P0459

For more details about this annex : see Official Journal of the European Patent Office, No. 12/82